(19) Europäisches Patentamt
European Patent Office
Office européen des brevets

(11) EP 1 619 214 A1

(12) # EUROPEAN PATENT APPLICATION
published in accordance with Art. 158(3) EPC

(43) Date of publication:
**25.01.2006 Bulletin 2006/04**

(21) Application number: **04726317.3**

(22) Date of filing: **07.04.2004**

(51) Int Cl.:
*C08F 290/06* (1995.01) *C08F 4/70* (1974.07)

(86) International application number:
**PCT/JP2004/005040**

(87) International publication number:
**WO 2004/096877 (11.11.2004 Gazette 2004/46)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.04.2003 JP 2003124905**

(71) Applicant: **KANEKA CORPORATION**
**Osaka-shi, Osaka 530-8288 (JP)**

(72) Inventors:
- **SAKAMOTO, Harumi**
  **5660073 (JP)**
- **FUKUI, Yoshifumi**
  **5600085 (JP)**

(74) Representative: **Vossius & Partner**
**Siebertstrasse 4**
**81675 München (DE)**

(54) **POLYOLEFIN GRAFT COPOLYMER OBTAINED BY USING LATE TRANSITION METAL COMPLEX COORDINATION POLYMERIZATION CATALYST AND METHOD FOR PRODUCING SAME**

(57) With respect to graft copolymerization of an olefin monomer with a silicone macromonomer produced by emulsion polymerization, a novel polyolefin graft copolymer and a process for producing the copolymer are provided. A composition containing the copolymer and a process for producing the composition are also provided. In the presence of a late transition metal complex coordination polymerization catalyst, an olefin monomer and a silicone macromonomer prepared by emulsion polymerization are graft copolymerized.

EP 1 619 214 A1

## Description

### Technical Field

The present invention relates to a novel polyolefin graft copolymer obtained by using a late transition metal complex coordination polymerization catalyst, a composition containing the copolymer, and the method for making the copolymer.

### Background Art

Graft copolymers, thanks to their structural features, are effectively used as functional polymers such as functionalizing agents for polymers, surfacing agents, compatibilizers for polymer blends, and surfactants for polymer/filler compound materials.

A well-known example of graft copolymers obtained by emulsion polymerization is a core-shell polymer. In particular, core-shell polymers, such as ABS resin, ASA resin, and MBS resin, incorporating diene rubber particles, acrylic rubber particles, acryl/silicone composite rubber particles, and the like are commercially available as highly impact-resistant resins or resin compositions. However, these resins have a drawback in that they are not suitable for low polarity resins, such as polyethylene and polypropylene due to their low dispersibility.

Although olefin graft copolymers (core-shell polymers) obtained by emulsion polymerization are known (Japanese Unexamined Patent Application Publication No. 52-108490), high temperature and high pressure are necessary, which is a problem. Moreover, since the process is radical polymerization, only ethylene can be substantially polymerized, which is another problem.

As the coordination polymerization catalysts for olefins, a Ziegler-Natta catalyst and a more recent metallocene catalyst are well known. Since these early transition metal-based catalysts have low tolerance to polar compounds in particular, they lose their activity in emulsion polymerization systems. Here, the term "tolerance" means that polar compounds do not readily coordinate to complexes or catalytic activated species and, even if they did, the catalysts do not readily become inactive. It also means that the catalyst do not readily react with polar compounds or do not readily become decomposed.

As exemplarily described in overview sections of various articles (S. D. Ittel, L. K. Johnson, M. Brookhart, Chemical Review, 2000, vol. 100, pp. 1169-1204; Kotohiro NOMURA, Yuki Gosei Kagaku Kyokaishi (Journal of the Society of Synthetic Organic Chemistry, Japan), 2000, vol. 58, pp. 293-305; and S. Mecking, A. Held, F.M. Bauers, Angewandte, Chemie International Edition, 2002, vol. 41, pp. 544-561), coordination polymerization catalysts based on late transition metal complexes are now drawing much attention since these catalysts have high tolerance to polar compounds such as polar monomers (e.g., polar vinyl monomers such as (meth)acrylates) and polar solvents (e.g., tetrahydrofuran, ethers, acetones, ethyl acetate, and water).

### Disclosure of Invention

An object of the present invention is to overcome the above-described drawbacks of graft copolymerization of olefin monomers with silicone particles (hereinafter also referred to as silicone macromonomers) produced by emulsion polymerization and to provide novel polyolefin graft copolymers. Another object of the present invention is to provide compositions containing the novel polyolefin graft copolymers and methods for making the copolymers.

In order to achieve the above-described objects, the present inventors have conducted extensive research and completed the present invention. In other words, the present invention is directed to a polyolefin graft copolymer produced in the presence of a late transition metal complex coordination polymerization catalyst by graft copolymerization of an olefin monomer with a silicone macromonomer produced by emulsion polymerization.

A preferred embodiment relates to a polyolefin graft copolymer in which the late transition metal complex coordination polymerization catalyst is a complex of a ligand having two imine nitrogen atoms and a transition metal selected from those of Groups 8 to 10 of the periodic table.

A preferred embodiment relates to a polyolefin graft copolymer in which the late transition metal complex coordination polymerization catalyst is a complex of an $\alpha$-diimine ligand and a transition metal selected from those of Group 10 of the periodic table.

A preferred embodiment relates to a polyolefin graft copolymer in which the late transition metal complex coordination polymerization catalyst is an active species represented by general formula (1) or (2) after the catalyst is reacted with a co-catalyst:

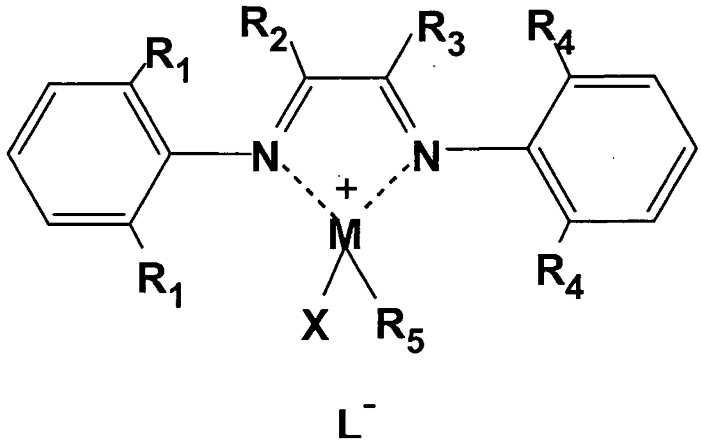

(1)

(wherein M is palladium or nickel; $R_1$ and $R_4$ are each independently a $C_1$-$C_4$ hydrocarbon group; $R_2$ and $R_3$ are each independently a hydrogen atom or a methyl group; $R_5$ is a halogen atom, a hydrogen atom, or a $C_1$-$C_{20}$ organic group; X is an organic group containing a heteroatom that can coordinate to M, wherein X may be bonded to $R_5$ or may be absent; and $L^-$ is an anion);

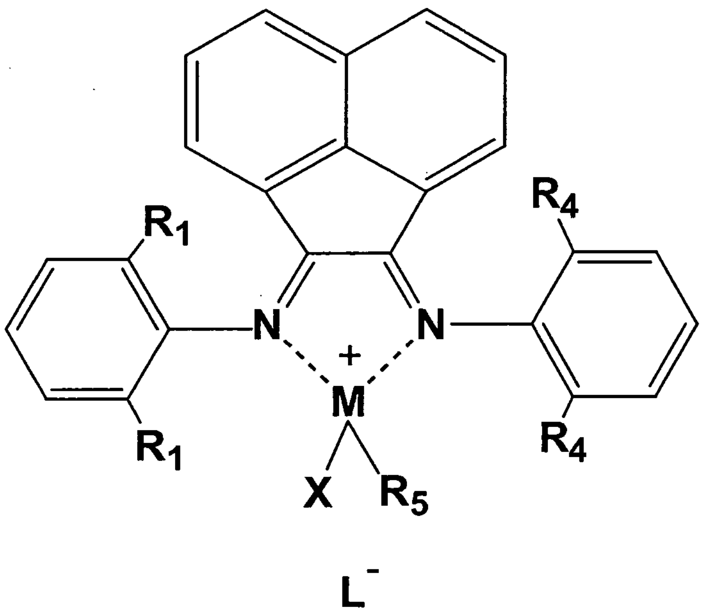

(2)

(wherein M is palladium or nickel; $R_1$ and $R_4$ are each independently a $C_1$-$C_4$ hydrocarbon group; $R_5$ is a halogen atom, a hydrogen atom, or a $C_1$-$C_{20}$ organic group; X is an organic group containing a heteroatom that can coordinate to M, wherein X may be bonded to $R_5$ or may be absent; and $L^-$ is an anion) .

A preferred embodiment relates to a polyolefin graft copolymer in which the silicone macromonomer prepared by emulsion polymerization is a silicone macromonomer produced by reacting an organosiloxane with a compound having, in its molecule, a functional group reactive with the organosiloxane and a carbon-carbon double bond for coordination polymerization.

A preferred embodiment relates to a polyolefin graft copolymer in which the polyolefin in the polyolefin graft copolymer has a branched structure.

A preferred embodiment relates to a polyolefin graft copolymer in which the olefin monomer is ethylene or propylene.

The present invention also relates to a composition containing the polyolefin graft copolymer.

A preferred embodiment of the composition containing the polyolefin graft copolymer relates to a composition containing a polyolefin resin.

The present invention further relates to a process for producing the polyolefin graft copolymer.

The present invention also relates to a process for producing the composition described above.

Best Mode for Carrying Out the Invention

The present invention will now be described in detail. The present invention is directed to a polyolefin graft copolymer produced in the presence of a late transition metal complex coordination polymerization catalyst by graft copolymerization of an olefin monomer with a silicone macromonomer produced by emulsion polymerization. Any late transition metal complex coordination polymerization catalyst is usable in the present invention as long as it exhibits olefin polymerization activity in the presence of water. Examples of the late transition metals include those of Groups 8 to 10 in the periodic table, namely, iron, cobalt, nickel, ruthenium, rhodium, palladium, osmium, iridium, and platinum. Among them, nickel, palladium, and platinum of Group 10 are more preferable. Nickel and palladium are yet more preferable, and palladium, which has high tolerance to water, is most preferable.

Examples of the ligands in the late transition metal complexes of the present invention include, but are not limited to, ligands containing nitrogen, oxygen, phosphorus, and sulfur. For example, ligands disclosed in the following documents may be used: overview sections of Chem. Rev. 2000, vol. 100, p. 1169, Yuki Gosei Kagaku Kyokaishi (Journal of the Society of Synthetic Organic Chemistry, Japan), 2000, vol. 58, p. 293, and Angew. Chem. Int. Ed. 2002, vol. 41, p. 544; WO97/17380; WO97/48740; Chem. Commun. 2000, p. 301; Macromol. Symp. 2000, vol. 150, p. 53; Macromolecules, 2001, vol. 34, p. 1165; Macromolecules, 2001, vol. 34, p. 2022; and Macromolecules, 2003, vol. 36, p. 6711. Among these, ligands containing two imine nitrogen atoms, in particular, an α-diimine ligand, is preferred for their easy synthesis.

An active species represented by general formula (1) or (2) below obtained by reacting the late transition metal complex coordination polymerization catalyst of the present invention with a co-catalyst is preferably used:

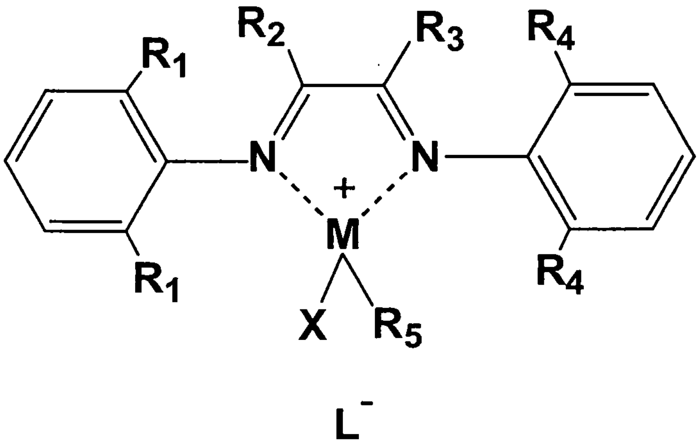

(1)

(wherein M is palladium or nickel; $R_1$ and $R_4$ are each independently a $C_1$-$C_4$ hydrocarbon group; $R_2$ and $R_3$ are each independently a hydrogen atom or a methyl group; $R_5$ is a halogen atom, a hydrogen atom, or a $C_1$-$C_{20}$ organic group; X is an organic group containing a heteroatom that can coordinate to M, wherein X may be bonded to $R_5$ or may be absent; and $L^-$ is an anion); or

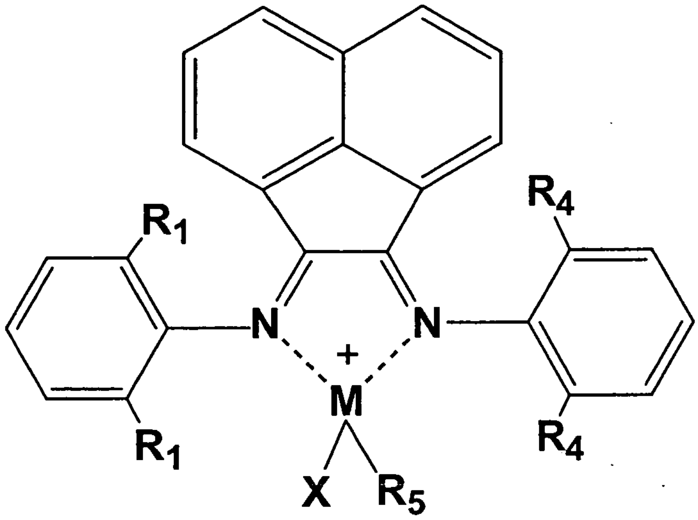

(2)

L⁻

(wherein M is palladium or nickel; $R_1$ and $R_4$ are each independently a $C_1$-$C_4$ hydrocarbon group; $R_5$ is a halogen atom, a hydrogen atom, or a $C_1$-$C_{20}$ organic group; X is an organic group containing a heteroatom that can coordinate to M, wherein X may be bonded to $R_5$ or may be absent; and $L^-$ is an anion).

Examples of the molecule represented by X that can coordinate to M include polar compounds such as diethyl ether, acetone, methyl ethyl ketone, acetaldehyde, acetic acid, ethyl acetate, water, ethanol, acetonitrile, tetrahydrofuran, dimethylformamide, dimethyl sulfoxide, and propylene carbonate. Alternatively, X may be absent. When $R_5$ has a heteroatom, in particular, when $R_5$ has carbonyl oxygen such as an ester bond, the carbonyl oxygen may function as X and coordinate to M. It is known that, in polymerization with an olefin, the olefin coordinates to M.

The counter anion represented by $L^-$ is produced together with a cation (M+) as a result of the reaction between a co-catalyst and a catalyst composed of an $\alpha$-diimine ligand and a transitional metal. The counter anion may be any as long as it can form a non-coordinating ion pair in a solvent.

The $\alpha$-diimine ligand in which each imine nitrogen atom has an aromatic group, i.e., a compound represented by $ArN=C(R_2)C(R_3)=NAr$, is preferred for its synthetic ease and high activity. Preferably, $R_2$ and $R_3$ are each a hydrocarbon group. In particular, $R_2$ and $R_3$ are preferably each a hydrogen atom, a methyl group, or a substance having an acenaphthene skeleton represented by general formula (2) from the standpoint of synthetic ease and high activity. Use of an $\alpha$-diimine ligand in which each imine nitrogen atom has a substituted aromatic group is effective from the standpoint of steric factors and is preferred since the molecular weight of the polymer tends to increase. Accordingly, Ar is preferably an aromatic group having a substituent, e.g., 2,6-dimethylphenyl, 2,6-diisopropylphenyl, or the like.

The auxiliary ligand ($R_5$) in the active species obtained from the late transition metal complex of the present invention is preferably a hydrocarbon group, a halogen group, or a hydrogen group for the following reason. The cation ($Q^+$) of a co-catalyst described below abstracts the halogen from the metal-halogen bond of the catalyst to produce a salt; meanwhile, the cation (M+), i.e., an active species, having a metal-carbon bond, a metal-halogen bond, or a metal-hydrogen bond is produced from the catalyst. Thus, the cation must form a non-coordinating ion pair with the anion (L-) of the co-catalyst. Specific examples of $R_5$ include methyl, chloro, bromo and hydrogen groups. In particular, methyl and chloro groups are preferred for their synthetic ease. Since occurrence of olefin insertion to the $M^+$-halogen bond is less frequent than that to the $M^+$-carbon (or hydrogen) bond, $R_5$ is particularly preferably a methyl group. Moreover, $R_5$ may be an organic group containing an ester bond having carbonyl oxygen that can coordinate to M, e.g., $R_5$ may be a group derived from methyl butyrate.

The co-catalyst can be expressed as $Q^+L^-$. Q may be Ag, Li, Na, K or H. Q is preferably Ag since halogen abstraction reaction can be readily completed. Inexpensive Na and K are also preferred. Examples of L include $BF_4$, $B(C_6F_5)_4$, $B(C_6H_3(CF_3)_2)_4$, $PF_6$, $AsF_6$, $SbF_6$, $(RfSO_2)_2CH$, $(RfSO_2)_3C$, $(RfSO_2)_2N$, and $RfSO_3$. In particular, $PF_6$, $AsF_6$, $SbF_6$, $(RfSO_2)_2CH$, $(RfSO_2)_3C$, $(RfSO_2)_2N$, and $RfSO_3$ are preferred since they are highly stable against polar compounds, and $PF_6$, $AsF_6$, and $SbF_6$ are more preferred for their synthetic ease and ready industrial availability. From the standpoint of high activity, $BF_4$, $B(C_6F_5)_4$, and $B(C_6H_3(CF_3)_2)_4$, and, in particular, $B(C_6F_5)_4$ and $B(C_6H_3(CF_3)_2)_4$ are preferred. Rf is a hydrocarbon group containing a plurality of fluorine groups. Fluorine groups are necessary for

giving non-coordinating anions, and the number of the fluorine groups is preferably as large as possible. Nonlimiting examples of Rf include $CF_3$, $C_2F_5$, $C_4F_9$, $C_8F_{17}$, and $C_6F_5$. These may be used alone or in combination.

The molar ratio of late transition metal complex catalyst/co-catalyst is 1/0.1 to 1/10, preferably 1/0.5 to 1/2, and most preferably 1/0.75 to 1/1.25 because of the above-described reasons of activation.

The olefin monomers usable in the present invention are not particularly limited as long as they contain 2 to 20 carbon atoms. Examples of the olefin monomers include ethylene, propylene, 1-butene, 1-hexene, 1-octene, 1-decene, 1-hexadecene, 1-eicosen, 4-methyl-1-pentene, 3-methyl-1-butene, vinylcyclohexane, cyclopentene, cyclohexene, cyclooctene, and norbornene. A small amount of a diene, e.g., 1,3-butadiene, 3,3-dimethyl-1,5-hexadiene, 1,13-tetradecadiene, isoprene, 1,5-cyclooctadiene, norbornadiene, 5-vinyl-2-norbornene 5-phenyl-2-norbornene, dimethanooctahydronaphthalene, ethylidene norbornene, dicyclopentadiene, or 1,4-hexadiene, may be added as long as the effect of the present invention is not impaired. Among these, α-olefins having ten or less carbon atoms are preferable. Examples thereof include ethylene, propylene, 1-butene, 1-hexene, and 1-octene. From the standpoint of activity, ethylene and propylene are particularly preferable. These olefin monomers may be used alone or in combination.

The amount of the olefin monomer used is not particularly limited. Preferably, the molar ratio of olefin monomer/active species (lesser one of the catalyst and the co-catalyst) is 10 to $10^9$, more preferably $10^2$ to $10^7$, and most preferably $10^3$ to $10^5$. At an excessively small molar ratio, only a polymer with a small molecular weight is obtained. At an excessively large molar ratio, the yield of the polymer relative to the monomer tends to decrease.

The polyolefin in the polyolefin graft copolymer obtained by the present invention may have a branched structure, a 1,ω-insertion structure (refer to Chem. Rev. 2000, vol. 100, p. 1169; Yuki Gosei Kagaku Kyokaishi (Journal of the Society of Synthetic Organic Chemistry, Japan), 2000, vol. 58, p. 293), or an atactic structure when compared with that produced using early transition metal complexes. Late transition metal complexes cannot extensively control the insertion direction of olefin monomers having at least three carbon atoms due to the steric factors of the ligands; thus, a tacticity does not readily appear (atactic). Accordingly, amorphous polymers are frequently obtained. Since amorphous polymers are soluble in solvents, the catalyst or the residue can be easily removed after polymerization by filtering, washing, adsorbing, or the like.

The silicone macromonomer produced by emulsion polymerization used in the present invention preferably contains, per molecule, at least one carbon-carbon double bond for graft copolymerization with the olefin monomer. The carbon-carbon double bond preferably readily undergoes coordination polymerization and is preferably in an allyl terminal group (α-olefin structure), a cyclic olefin terminal group, a styryl terminal group, or a (meth)acryl terminal group. In particular, the double bond is preferably in a (meth)acryl or allyl terminal group since it can readily induce coordination polymerization, or graft copolymerization, with the olefin.

The main component of the silicone macromonomer produced by the emulsion polymerization of the present invention is an organosiloxane. A large number of organosiloxanes are known, and any one may be used without limitation. One or more organosiloxanes may be selected according to the functions needed. The silicone macromonomer of the present invention may contain another monomer. The main chain skeleton may be linear, cyclic, or branched, and may have a three-dimensional network structure formed by crosslinking. The silicone macromonomer of the present invention may be fine particles. The particles may be composite particles or core-shell particles.

The silicone macromonomer of the present invention is preferably a silicone macromonomer produced by reacting an organosiloxane (hereinafter also referred to as "organosiloxane (A-1)") with a compound (hereinafter also referred to as "compound (A-2)") containing in the molecule a group reactive with the organosiloxane (A-1) and a carbon-carbon double bond for coordination polymerization. If necessary, the silicone macromonomer of the present invention may contain a monomer (hereinafter also referred to as "compound (A-3)") that has a functional group reactive with the organosiloxane (A-1) and/or the compound (A-2).

The content of each component is not particularly limited and may be any. Preferably, the organosiloxane (A-1) is used in an amount of 40 to 99.99 wt% and more preferably 60 to 99.90 wt%. At an excessively low content, the physical properties of the resulting polyolefin graft polymer may be degraded. Preferably, the compound (A-2) is used in an amount of 0.01 to 25 wt% and more preferably 0.1 to 10 wt%. At an excessively low content, grafting with the olefin monomer becomes insufficient. At an excessively high content, the physical properties of the resulting polyolefin graft polymer may be degraded. When the compound (A-3) is used, its content is preferably 50 wt% or less and more preferably 30 wt% or less. At an excessively large compound (A-3) content, the physical properties of the resulting polyolefin graft polymer may be degraded. The total of the organosiloxane (A-1), the compound (A-2), and the compound (A-3) is 100 wt%.

The organosiloxane (A-1) is a component of the main skeleton of the silicone macromonomer. The organosiloxane (A-1) may have any molecular weight as long as it is emulsion polymerizable and is liquid. From the standpoint of designability of the physical properties of the resulting silicone macromonomer, the molecular weight of the organosiloxane (A-1) is preferably 1,000 or less and more preferably 500 or less. The organosiloxane (A-1) may be linear, cyclic, or branched. From the standpoints of applicability to emulsion polymerization systems and economy, a cyclic siloxane is preferable. Examples of the cyclic siloxane include hexamethylcyclotrisiloxane, octamethylcyclotetrasiloxane, decamethylcyclopentasiloxane, dodecamethylcyclohexasiloxane, tetramethyltetraphenylcyclotetrasiloxane, octaphenylcyclotetrasiloxane, and 1,2,3,4-tetrahydro-1,2,3,4-tetramethylcyclotetrasiloxane. A bifunctional alkoxysilane may also be used as the organosiloxane (A-1). Examples thereof include dimethoxydimethylsilane and diethoxydimethylsilane. Furthermore, a combination of a cyclic siloxane and a bifunctional alkoxysilane may be used. These organosiloxanes (A-1) may be used alone or in combination.

The compound (A-2) reacts with the organosiloxane (A-1) through the functional group contained in the compound (A-2). As a result, a carbon-carbon double bond for coordination polymerization can be introduced to a side chain or a terminal group of the resulting silicone macromonomer. The carbon-carbon double bond for coordination polymerization is a component that enables graft copolymerization of the silicone macromonomer with the olefin monomer. The carbon-carbon double bond for coordination polymerization is preferably in a vinyl terminal group, an allyl terminal group ($\alpha$-olefin structure), a cyclic olefin terminal group, a styryl terminal group, or a (meth)acryl terminal group. In particular, a carbon-carbon double bond in a (meth)acryl terminal group or an allyl terminal group that can readily induce coordination polymerization, i.e., graft copolymerization with the olefin, is preferable. The group that can react with the compound (A-1) is preferably a hydrolyzable alkoxy group bonded to a silicon atom or a silanol group, or a cyclic-siloxane-containing group copolymerizable with the compound (A-1) by ring-opening.

The examples of the compound (A-2) include alkoxysilane compounds such as 3-acryloxypropylmethyldimethoxysilane, 3-acryloxypropyltrimethoxysilane, 3-acryloxypropylmethyldiethoxysilane, and 3-acryloxypropyltriethoxysilane; and organosiloxanes such as 1,3,5,7-tetrakis(acryloxypropyl)-1,3,5,7-tetramethylcyclotetrasiloxane, and 1,3,5-tris(acryloxypropyl)-1,3,5-trimethylcyclotrisiloxane. Among these, 3-acryloxypropylmethyldimethoxysilane having high reactivity is particularly preferable. These compounds (A-2) may be used alone or in combination.

The compound (A-3) is a component that reacts with the organosiloxane (A-1) and/or the compound (A-2) and is used for adjusting the physical properties of the silicone macromonomer. For example, by using a polyfunctional silane compound having at least three hydrolyzable, silicon-atom-bonded groups in a molecule or its partial hydrolysate, Tg and elasticity modulus can be adjusted by introducing crosslinked structures into the silicone macromonomer. Examples of the polyfunctional silane compound include alkoxysilanes such as methyltrimethoxysilane, ethyltrimethoxysilane, methyltri(methoxyethoxy)silane, tetramethoxysilane, tetraethoxysilane, methyltriethoxysilane, and ethyltriethoxysilane, and their hydrolysates; acetoxysilanes such as methyltriacetoxysilane, ethyltriacetoxysilane, and tetraacetoxysilane, and their hydrolysates. Furthermore, a non-silicone macromonomer having a functional group reactive with the organosiloxane (A-1) and/or the compound (A-2) may also be used as the compound (A-3). It is possible to obtain composite particles of silicone and acryl in this manner. These compounds (A-3) may be used alone or in combination.

The silicone macromonomer used in the present invention may be produced by a common polymerization process under acidic or basic conditions. An example of the process includes combining the organosiloxane (A-1), the compound (A-2), and the optional compound (A-3) with an emulsifier and water in a homomixer, a colloid mill, a homogenizer, or the like to prepare an emulsion, adjusting the pH of the system to 2 to 4 with alkylbenzenesulfonic acid, sulfuric acid, or the like, heating the system to conduct polymerization, and adding an alkaline component, such as sodium hydroxide or potassium hydroxide, to neutralize the system.

Alternatively, all of the starting materials may be added in one step, and the resulting mixture may be stirred for a predetermined time before decreasing the pH. Alternatively, part of the starting materials may be fed to prepare an emulsion having a decreased pH, and the rest of the starting materials may be sequentially added to the emulsion afterward. When starting materials are sequentially added, they may be directly added as they are, or they may be combined with water and an emulsifier to prepare an emulsion and this emulsion may be added. From the standpoint of polymerization rate, the starting material sequentially added is preferably in an emulsion state. The reaction temperature is preferably in the range of 50°C to 95°C. At a temperature less than 50°C, the polymerization rate may decrease. At a temperature exceeding 95°C, the stability is decreased. The reaction time is preferably 1 to 100 hours and more preferably 5 to 50 hours. An excessively short reaction time results in incomplete polymerization. An excessively long reaction time decreases the productivity.

In polymerization under acidic conditions, the Si-O-Si bonds of the polyorganosiloxane skeleton are usually in an equilibrium state between cleavage and bond formation. The equilibrium is temperature-dependent, and lower temperatures yield polyorganosiloxane of higher molecular weight. Thus, in order to obtain polyorganosiloxane having high molecular weights, after the organosiloxane (A-1) is prepared by thermal polymerization, the system is preferably cooled to a temperature equal to or lower than the polymerization temperature to conduct aging. To be more specific, the polymerization is conducted at 50°C or more, heating is discontinued when the polymerization conversion rate reached 75% to 90% and more preferably 82% to 89%, and then the system is cooled to 10°C to 50°C and more preferably 20°C to 45°C, followed by about 5 to 100 hours of aging. Here, the term "polymerization conversion rate" refers to the rate of the organosiloxanes in the starting materials converted to low volatility components.

The amount of water used in the emulsion polymerization is not particularly limited and should be sufficient to allow dispersion/emulsification of the monomers. Usually, the weight of the water is 1 to 20 times the total weight of the organosiloxane (A-1), the compound (A-2), and the compound (A-3). When the amount of water used is excessively small, the ratio of the monomers which are hydrophobic oils is excessively large, and the emulsion in the W/O phase

does not shift to the O/W phase. Thus, water rarely forms a continuous layer. When the amount of water used is excessively large, the stability is degraded and the reactor efficiency is decreased.

The emulsifier for emulsion polymerization is not particularly limited and may be any known emulsifier that does not lose emulsifying properties in the pH region of the reaction. Examples of the emulsifier include alkylbenzenesulfonic acid, sodium alkylbenzenesulfonate, sodium alkylsulfate, sodium alkylsulfosuccinate, and sodium polyoxyethylenenonylphenylether sulfonate. The amount of the emulsifier used is not particularly limited and may be adequately adjusted according to the target particle diameter of the silicone macromonomer. From the standpoint of yielding sufficient emulsifying properties and preventing adverse effects on the physical properties of the silicone macromonomer and the resulting polyolefin graft copolymer, the emulsifier content is preferably 0.05 to 20 wt% and more preferably 0.1 to 10 wt% in the emulsion.

The particle diameter of the silicone macromonomer can be controlled by common emulsion polymerization techniques, such as increasing/decreasing the amount of the emulsifier used. From the standpoint of yielding satisfactory dispersibility in a thermoplastic resin, the particle diameter is preferably 20 to 1,000 nm and more preferably 30 to 500 nm.

The silicone macromonomer produced by the emulsion polymerization of the present invention may be composed of a single silicone macromonomer, as described above, or may be composite particles of one or more macromonomers or a latex blend.

The silicone macromonomer produced by the emulsion polymerization of the present invention may be directly used for the reaction with the olefin monomer or may be processed, e.g., diluted, condensed, heated, or aged, before it is used for the reaction, if necessary. Moreover, additives such as an emulsifier, an anti-freezing agent, a stabilizer, and a pH adjustor may be added to the silicone macromonomer to adjust the composition before the reaction. The silicone macromonomer is preferably used as a latex having a solid content of 1 to 50 wt% and more preferably 5 to 30 wt%. At an excessively large solid content, the latex particles become aggregated, thereby possibly leading to inhomogeneous reaction. At an excessively small solid content, the amount of the reaction liquid as a whole is increased and the reactor efficiency is decreased.

The production of the graft copolymer of the present invention by polymerization is conducted in an emulsion system or a system similar to the emulsion system. For example, the reaction may be conducted by homogeneously dispersing the coordination polymerization catalyst and the olefin monomer in the silicone macromonomer latex. When the olefin monomer to be used is gaseous at the reaction temperature, the olefin monomer may be liquefied or solidified at low temperature and then added as a liquid or solid to the system, followed by heating the system to the reaction temperature. Alternatively, the olefin monomer may be fed as gas under pressure. All the silicone macromonomer, the olefin monomer, and the catalyst may be fed to the reactor in one step. Alternatively, part of these materials may be fed to the reactor, and, subsequently, the remaining portion may be continuously or intermittently added to the system. They may be fed directly as they are or as an emulsion with water and an emulsifier.

The ratio of the olefin monomer to the silicone macromonomer can be adjusted as desired. Preferably, 1 to 100 parts by weight and more preferably 2 to 33 parts by weight of the olefin monomer is used per 100 parts by weight of the silicone macromonomer used. When the olefin monomer is a volatile liquid having a boiling point of 100°C or less or a gas, it is possible to use a large excess of the olefin monomer to conduct polymerization, stop the reaction when the desired amount is produced by polymerization, and then remove the unreacted monomers.

During the polymerization, a small amount of an organic solvent may be added to increase the solubility of the monomer and the catalyst and to accelerate the reaction.

The solvent is preferably an aliphatic or aromatic solvent that may be halogenated. Examples thereof include toluene, ethylbenzene, chlorobenzene, hexane, heptane, cyclohexane, methylcyclohexane, butyl chloride, methylene chloride, and chloroform. The solvent may be a polar solvent such as tetrahydrofuran, diethyl ether, acetone, methanol, methyl ethyl ketone, or ethyl acetate. In particular, the solvent preferably has low water solubility, is readily impregnated in the silicone macromonomer used, and readily dissolves the catalyst. Examples of such preferable solvents include methylene chloride, chloroform, and butyl chloride.

These solvents may be used alone or in combination.

The total amount of the solvents used is preferably 30 vol% or less and more preferably 10 vol% or less of the volume of the entire reaction solution. Alternatively, the total amount of the solvents used is preferably 150 parts by weight of less and more preferably 100 parts by weight or less relative to the total weight of the silicone macromonomer used. The solvents in excessively large amounts induce aggregation of the latex particles or formation of new particles, frequently resulting in inhomogeneous reaction.

The production of the graft copolymer of the present invention is conducted usually at -30°C to 200°C and preferably at 0°C to 100°C. The polymerization time is usually 10 minutes to 100 hours, and the reaction pressure is normal to 10 MPa. The temperature and the pressure may be kept constant from the initiation to the termination of the reaction or may be changed continuously or stepwise through the reaction. When the olefin monomer used is a gas, such as ethylene or propylene, the pressure may gradually decrease as the monomers are consumed by the polymerization. In such a case, the reaction may be continued under the pressure thus decreased or may be continued while

keeping the pressure at a constant level by feeding monomers, heating the system, or the like.

In some cases, the graft copolymer contains free polyolefin for its total weight. Preferably, the graft copolymer does not substantially contain any free polyolefin. This can be achieved by adjusting various polymerization conditions. For example, the amount of the free polyolefin can be decreased by increasing the amount of the compound (A-2) in the silicone macromonomer to increase the number of the carbon-carbon double bonds for coordination polymerization in the macromonomer, by using core-shell macromonomer particles to localize the carbon-carbon double bonds for coordination polymerization in the particle surface, or by adding a solvent during the production of the olefin monomer by polymerization to impregnate the macromonomer particles with the catalytic solution.

The polyolefin graft copolymer obtained by the present invention is usually in the form of latex. The particle diameter of the latex is usually 30 nm to 1,000 nm depending on the particle diameter of the material macromonomer and the amount of the olefin monomer reacted with the macromonomer. In some cases, some of the latex particles may be aggregated and precipitated, or free polyolefin may be precipitated as a byproduct depending on the reaction conditions. Preferably, the reaction is conducted under conditions that do not produce such precipitates.

The latex containing the graft copolymer particles obtained as described above can be recovered as powder, resin lumps, or rubber lumps composed of graft copolymer particles, by processing, such as by spray-drying the latex or by aggregating the latex with an electrolyte such as calcium chloride, magnesium chloride, calcium sulfate, magnesium sulfate, aluminum sulfate, or calcium formate, followed by heating, dehydrating, and drying. Alternatively, the latex may be recovered by pelletizing the dried product of the graft copolymer particles of the present invention with an extruder or a banbury mixer or by passing the water-containing resin, which has been subjected to aggregation and dehydration, through a press dehydrator to obtain pellets.

The graft copolymer particles of the present invention may be mixed with a thermoplastic or thermosetting resin to prepare a resin composition of the present invention.

Preferable examples of the thermoplastic resin include commonly used resins, such as polyolefins, e.g., polypropylene, polyethylene, ethylene propylene rubber, ethylene propylene diene rubber, ethylene octene rubber, polymethylpentene, an ethylene-cyclic olefin copolymer, an ethylene-vinyl acetate copolymer, an ethylene-glycidylmethacrylate copolymer, and an ethylene-methylmethacrylate copolymer; vinyl polymers, e.g., polyvinyl chloride, polystyrene, a styrene-acrylonitrile copolymer, a styrene-acrylonitrile-N-phenylmaleimide copolymer, an α-methylstyrene-acrylonitrile copolymer, polymethyl methacrylate, and a methyl methacrylate-styrene copolymer; polyesters such as polyethylene terephthalate and polybutylene terephthalate; polycarbonate; polyamide; a polyphenylene ether-polystyrene composite; polyacetal; polyether ether ketone; and polyether sulfone. Preferable examples of the thermosetting resin include commonly used resins such as phenol resins, urea resins, melamine resins, unsaturated polyester resins, and epoxy resins. Among these, polyolefins such as polyethylene and polypropylene are particularly preferable from the standpoint of high dispersibility of the graft copolymer of the present invention. These thermoplastic resins or the thermosetting resins may be used alone or in combination.

The mixing ratio between the graft copolymer particles and the thermoplastic or thermosetting resin should be adequately determined to achieve a good balance between the physical properties of the molded product. In order to impart sufficient physical properties, the amount of the graft copolymer particles is 0.1 part or more and preferably 5 parts or more per 100 parts of the thermoplastic or thermosetting resin. In order to maintain the properties of the thermoplastic or thermosetting resin, the amount of the graft copolymer particles is 500 parts or less and preferably 100 parts or less per 100 parts of the thermoplastic resin.

The graft copolymer composed of the silicone macromonomer produced by the emulsion polymerization with the polyolefin monomer of the present invention contains the polyolefin component. Thus, the graft copolymer shows good dispersion property in a low polarity resin such as polyethylene or polypropylene. Moreover, since the graft copolymer contains a silicone component, various functions can be imparted. The polyolefin graft copolymer and the composition containing the copolymer according to the present invention can be used as an oil resistance improver for polyolefins, a cold brittleness improver, a flame retarder aid, an impact resistance improver, an agent for imparting elastomer properties, a slidability imparting agent, a plasticizer, a chemical resistance improver, a gas permeability imparting agent, an electrical property improver, a compatibilizer, or the like.

The graft copolymer and the composition containing the graft copolymer according to the present invention may contain common additives known in the plastic and rubber industries, such as a plasticizer, a stabilizer, a lubricant, a UV absorber, an antioxidant, a flame retarder, a flame retarder aid, a pigment, glass fibers, a filler, a polymer processing aid, or the like.

The thermoplastic resin composition of the present invention may be prepared by a common method used for blending thermoplastic resin. For example, a thermoplastic resin, the graft copolymer particles of the present invention, and, if required, additive components are melted and kneaded in a single-screw extruder, a twin-screw extruder, a roll, a banbury mixer, a brabender, a kneader, a high-shear mixer, or the like, for example. The order of kneading the respective components is not particularly limited and may be determined according to the equipment used, workability, and the physical properties of the thermoplastic resin composition to be produced.

When the thermoplastic resin is produced by emulsion polymerization, it is possible to blend the thermoplastic resin and the graft copolymer particles both in the emulsion state and then coaggregate the mixture.

Examples of the method for molding the thermoplastic resin composition obtained as such include methods commonly used for molding thermoplastic resin compositions, e.g., injection molding, extrusion molding, blow molding, and calender molding.

(EXAMPLES)

The present invention will be described in further detail below by way of examples. The present invention is not limited to these examples.

In the SYNTHETIC EXAMPLES, EXAMPLES, and COMPARATIVE EXAMPLES below, the physical properties and various characteristics were determined as follows:

[Average particle diameter] Particle diameters were measured with Submicron Particle Sizer Model 370 produced by NICOMP by dynamic light scattering, and the volume-average particle diameter was calculated.

[Gel content] Into a 300-mesh stainless steel meshed bag, about 100 mg of a sample was placed. The bag was immersed in toluene at room temperature for 24 hours or more and then dried under reduced pressure for 4 hours or more at room temperature to determine the weight of the toluene insoluble component in the sample. The gel content was calculated based on the equation below:

$$\text{Gel content (wt\%)} = \{(\text{dry weight of toluene insoluble component})/(\text{weight before immersion in toluene})\} \times 100$$

[Polymerization conversion rate] In emulsion polymerization of the silicone macromonomer, the total weight of the monomer, the emulsifier, and the initiator charged was divided by the total weight of the entire reaction solution. The maximum solid concentration when the monomer was completely (100%) polymerized was then determined. A sample of about 0.5 to 2 g taken from the latex prepared by the polymerization was placed in an ointment jar and thermally dried in an oven at 100°C or more for 30 minutes or more to determine the percentage of the remaining solid component, which was assumed to be the solid component concentration in the latex. The polymerization conversion rate was calculated based on the equation below:

$$\text{Polymerization conversion rate (wt\%)} = \{(\text{solid component concentration in latex})/(\text{maximum solid content concentration})\} \times 100$$

[$^1$H NMR spectrum] The latex was salted out with calcium chloride; washed with water, and dried to obtain a resin. About 10 mg of the resin was dissolved in about 1 mL of deuterated chloroform (commercially available reagent) to measure a $^1$H NMR spectrum with a 300 MHz NMR analyzer (Gemini 300 produced by Varian). The product was identified from the polyethylene $CH_2$ peak at 1.2 to 1.3 ppm, polyethylene $CH_3$ peak at 0.8 to 0.9 ppm, and siloxane $CH_3$ peak at 0.0 to 0.1 ppm.

[Tensile modulus and tensile elongation] A pressed sheet about 1 mm in thickness of a polypropylene resin or the resin composition of the present invention was prepared, and a No. 2 (1/3) small specimen described in Appendix 1 of Japanese Industrial Standards (JIS) K7113 was punched out. Using a universal tester (Autograph AG-2000A produced by Shimadzu Corporation), the tensile properties were measured at n = 3. The tensile modulus of the sample was measured at an initial speed of 1 mm/min, and subsequently the sample was pulled to 30%. The sample was then pulled to 40% at a speed of 5 mm/min. Lastly, the pulling speed was increased to 16.66 mm/min to measure the elongation at the breaking point.

[Oil resistance] A pressed sheet about 1 mm in thickness of a polypropylene resin or the resin composition of the present invention was prepared, and a No. 2 (1/3) small specimen described in Appendix 1 of Japanese Industrial Standards (JIS) K7113 was punched out. Using a universal tester, the tensile properties of the sample were measured at a pulling speed of 16.66 mm/min. From the same sheet, a dumbbell-shaped specimen was punched out and

subjected to oil resistance testing according to JIS-K6258. The specimen was immersed in IRM 903 oil (produced by Japan Sun Oil Company) at 100°C for 24 hours, and the tensile properties of the specimen were determined in the same manner to evaluate the changes in physical properties before and after the oil resistance testing.
[Coefficient of kinetic friction] Using a surface tester (HEIDON-14DR produced by Shinto Scientific Co., Ltd.), the coefficient of kinetic friction was measured. A 20 mm × 20 mm upper surface sheet and a 100 mm × 150 mm lower surface sheet were cut out from a pressed sheet having a thickness of about 2 mm, and the measurement was conducted at a vertical load of 200 g and a slip rate of 100 mm/min.

(SYNTHETIC EXAMPLE 1) Synthetic example of silicone macromonomer

In a reactor, 80 g of water, 30 g of octamethyltetracyclosiloxane (produced by Dow Corning Toray Co., Ltd.), 1.5 g of 3-acryloxypropylmethyldimethoxysilane (produced by Shin-Etsu Chemical Co., Ltd.), and 0.6 g of a 25% aqueous solution of sodium dodecylbenzenesulfonate (Neopelex produced by Kao Corporation) were charged and emulsified. To the resulting emulsion, 12 g of a 2.5% aqueous solution of dodecylbenzenesulfonic acid (produced by Tokyo Kasei Kogyo Co., Ltd.) was added, and the reaction was initiated at 80°C. Eight hours later, the polymerization conversion rate reached 73%. The system was cooled to room temperature, aged for 12 hours, and then neutralized with an aqueous solution of sodium hydroxide to obtain a silicone macromonomer latex. The amounts of the respective components used and the physical properties of the latex are shown in Table 1.

Table 1

| SYN. EX. | Water /g | Monomer | | | | Emulsifier /g (25% SDBS) | Initiator /g (2.5% DBSA) | Polymerization conversion rate | Average particle diameter | Gel content |
|---|---|---|---|---|---|---|---|---|---|---|
| | | (B-1)/g | | (B-2)/g | | | | | | |
| 1 | 80 | D4 | 30 | APMDMS | 1.5 | 0.6 | 12 | 73% | 174 nm | 34% |

SYN. EX: Synthetic Example

D4: Octamethyltetracyclosiloxane

APMDMS: 3-Acryloxypropylmethyldimethoxysilane

25% SDBS: 25 wt% aqueous sodium dodecylbenzenesulfonate solution

2.5% DBSA: 2.5 wt% aqueous dodecylbenzenesulfonic acid solution

(REFERENCE EXAMPLE 1) Ethylene homopolymerization

A palladium complex (hereinafter referred to as "[N^N]PdMeCl") having the structure represented by chemical formula (3) was synthesized by a known process described in documents such as J. Am. Chem. Soc., 1995, vol. 117, p. 6414:

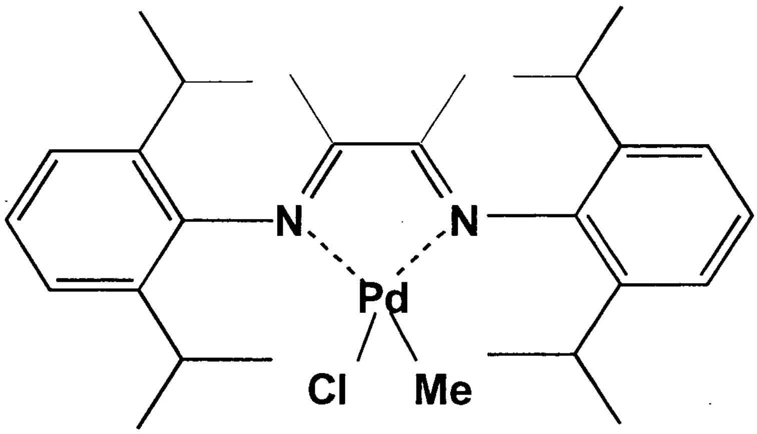

(3)

A diethylether solution (8 mL) containing 80 mmol/L of [N^N]PdMeCl was combined with 8 mL of a diethyl ether solution containing 80 mmol/L of $LiB(C_6F_5)_4$. LiCl was precipitated to prepare 16 mL of a diethylether solution containing 40 mmol/L of a [N^N]PdMe·$B(C_6F_5)_4$ complex (hereinafter this solution is referred to as "diethylether catalytic solution").

To a pressure vessel purged with nitrogen, 2 mL of the diethylether catalytic solution was fed, and diethylether was removed under reduced pressure at room temperature. Subsequently, 0.5 mL of methylene chloride was added to dissolve the catalyst. To this solution, 25 mL of a 0.4% aqueous sodium dodecylsulfate solution was added, and the resulting mixture was stirred to disperse the catalyst. Ethylene was introduced to adjust the pressure to 2 MPa, and the reaction was conducted for 30 hours at room temperature. The product was obtained as a mixture of resin lumps and a latex, and was identified as branched polyethylenes by $^1H$ NMR analysis. The latex component was salted out with a calcium chloride aqueous solution, filtered off, washed with water, and dried (post treatment) to obtain a polyethylene resin. The gel content of both the resin lumps and the salt precipitate of the latex was 0.5% or less. The salt precipitate (100 mg) of the latex was immersed in 100 mL of hexane for 24 hours at room temperature. The salt precipitate was completely dissolved as a result.

(EXAMPLE 1) Copolymerization of silicone macromonomer with ethylene

Into a Schlenk tube, 15 mL of the diethylether catalytic solution prepared in REFERENCE EXAMPLE 1 was fed. Diethylether was removed under reduced pressure at room temperature, and 15 mL of methylene chloride was added to dissolve the residue and to thereby prepare a methylene chloride solution (hereinafter, "methylene chloride catalytic solution") containing 40 mmol/L of a [N^N] PdMe·$B(C_6F_5)_4$ complex. The methylene chloride catalytic solution (0.5 mL) was mixed with 25 mL of the latex prepared in SYNTHETIC EXAMPLE 1 above to homogeneously disperse the catalyst. The resulting reaction mixture solution was fed into a nitrogen-purged pressure container, ethylene was introduced to adjust the pressure to 2 MPa, and reaction was conducted for 7 hours at room temperature. The product was obtained as a mixture of rubbery resin lumps and a latex. The latex component was salted out with an aqueous calcium chloride solution, filtered off, washed water, and dried (post treatment) to obtain a polyolefin graft copolymer resin of the present invention. $^1H$ NMR analysis confirmed that the resin lumps were mainly composed of a branched polyethylene and the salt precipitate of the latex was composed of a branched polyethylene and a siloxane macromonomer. The reaction conditions and the yield and physical properties of the product are shown in Table 2.

The salt precipitate (100 mg) of the latex was immersed in 100 mL of hexane for 24 hours at room temperature. An insoluble matter remained as a result. The insoluble matter was confirmed by $^1H$ NMR analysis as containing both the macromonomer component and the polyethylene component. Since a free polyethylene dissolves in hexane, the insoluble matter is a silicone macromonomer-ethylene copolymer.

Table 2

| | Material latex | | Catalytic solution | Amount of precipitated resin | Latex | | |
|---|---|---|---|---|---|---|---|
| | Raw materials | Amount charged | Amount charged | Yield | Amount of precipitate | Particle diameter | Gel content |
| Reference Example 1 | Water + SDS | 25 mL | 80 μmol | 9.68 g | 3.10 g | - | 0% |
| Example 1 | Synthetic Example 1 | 25 mL (including 5 g of PDMS) | 20 μmol | 0.87 g | 5.86 g | 185 nm | 39% |
| SDS: Sodium dodecylsulfate<br>PDMS: Polydimethylsiloxane | | | | | | | |

(EXAMPLE 2) Preparation of copolymer/PP composition pressed sheet

The salt precipitate (1 g) of the polyolefin graft copolymer latex of the present invention obtained in EXAMPLE 1 and 5 g of a polypropylene resin (F232DC) were kneaded with a microrheology compounder (MiniLab produced by ThermoHakke Corporation) at 200°C for 10 minutes to obtain a resin composition of the present invention. The resin composition was pressed at 200°C to prepare a sheet having a thickness of about 1 mm. The tensile modulus, tensile elongation, and oil resistance of this sheet were determined. The results are shown in Table 3.

(COMPARATIVE EXAMPLE 2) Preparation of homo PP pressed sheet

A polypropylene resin (20 g, F232DC produced by Grand Polymer Co., Ltd.) was kneaded in a laboplastomill (produced by Toyo Seiki Co., Ltd., capacity: 30 cc) at 200°C and 100 rpm for 10 minutes. Subsequently, the polypropylene resin was pressed at 200°C to prepare a sheet having a thickness of about 1 mm. The tensile modulus, tensile elongation, and the oil resistance were measured. The results are shown in Table 3. Similarly, a sheet having a thickness of about 2 mm was prepared, and a specimen was cut out from this sheet to measure the coefficient of kinetic friction. The results are shown in Table 4.

(COMPARATIVE EXAMPLE 3) Preparation of silicone/PP composition pressed sheet

One gram of the salt precipitate of the silicone macromonomer latex obtained in SYNTHETIC EXAMPLE 1 and 5 g of a polypropylene resin (F232DC) were kneaded with a microrheology compounder (MiniLab produced by ThermoHakke Corporation) at 200°C for 10 minutes to obtain a resin composition of the present invention. The resin composition was pressed at 200°C to prepare a sheet having a thickness of about 1 mm. The tensile modulus, tensile elongation, and oil resistance of this sheet were measured. The results are shown in Table 3.

Table 3

| | Tensile properties | | | Oil resistance | | | | |
|---|---|---|---|---|---|---|---|---|
| | Tensile modulus (MPa) | Stress at breaking point (MPa) | Strain at breaking point | | Maximum stress (MPa) | Rate of change (%) | Maximum strain (%) | Rate of change (%) |
| Example 2 | 358.3 | 27.6 | 694.3 | Untreated | 27.1 | -46.2% | 631.6 | -23.3% |
| | | | | After Immersing in oil | 14.6 | | 484.5 | |

Table continued

| | Tensile properties | | | Oil resistance | | | | |
|---|---|---|---|---|---|---|---|---|
| | Tensile modulus (MPa) | Stress at breaking point (MPa) | Strain at breaking point | | Maximum stress (MPa) | Rate of change (%) | Maximum strain (%) | Rate of change (%) |
| Comparative Example 2 | 543.2 | 35.1 | 730.3 | Untreated | 37.8 | -51.1% | 755.6 | -33.7% |
| | | | | After immersing in oil | 18.5 | | 500.8 | |
| Comparative Example 3 | 348.3 | 10.4 | 18.8 | | | | | |
| Example 2: 100 parts of polypropylene resin/20 parts of salt precipitate of Example 1<br>Comparative Example 2: 100 parts of polypropylene resin<br>Comparative Example 3: 100 parts of polypropylene resin/20 parts of salt precipitate of Synthetic Example 1 | | | | | | | | |

(EXAMPLE 3) Preparation of copolymer/PP composition pressed sheet

Two grams of the salt precipitate of the polyolefin graft copolymer latex of the present invention obtained in EXAMPLE 1 and 40 g of a polypropylene resin (F232DC) were kneaded in a laboplastomill (produced by Toyo Seiki Co., Ltd., capacity: 30 cc) at 200°C and 100 rpm for 10 minutes to obtain a resin composition of the present invention. The resin composition was pressed at 200°C to prepare a sheet having a thickness of about 2 mm. A specimen was cut out from the sheet to measure the coefficient of kinetic friction. The results are shown in Table 4.

(COMPARATIVE EXAMPLE 4) Preparation of silicone/PP composition pressed sheet

Two grams of the salt precipitate of the silicone macromonomer latex obtained in SYNTHETIC EXAMPLE 1 and 40 g of a polypropylene resin (F232DC) were kneaded in a laboplastomill (produced by Toyo Seiki Co., Ltd., capacity: 30 cc) at 200°C and 100 rpm for 10 minutes to obtain a resin composition of the present invention. The resin composition was pressed at 200°C to prepare a sheet having a thickness of about 2 mm. A specimen was cut out from the sheet to measure the coefficient of kinetic friction. The results are shown in Table 4.

Table 4

| | Composition | Coefficient of friction ($\mu$k) |
|---|---|---|
| Example 3 | Polypropylene resin: 100 parts<br>Salt precipitate of Example 1: 5 parts | 0.48 |
| Comparative Example 2 | Polypropylene resin: 100 parts | 0.76 |
| Comparative Example 4 | Polypropylene resin: 100 parts<br>Salt precipitate of Synthetic Example 1: 5 parts | 0.90 |

The composition of the present invention (EXAMPLE 2) had a lower rate of change in tensile properties after the oil resistance testing and higher oil resistance compared to the polypropylene resin (Comparative Example 2).

Industrial Applicability

As is described above, a graft copolymer of an olefin monomer and a silicone macromonomer can be easily obtained under moderate conditions of normal temperature and low pressure. The graft copolymer particles are suitably used for a modifier for a thermoplastic resin, in particular polyolefin. When the particles are used as a modifier for polypropylene, a sheet having improved oil resistance, flexibility (low tensile modulus), friction coefficient, oxygen permeation coefficient, and permanent set can be obtained.

## Claims

1. A polyolefin graft copolymer produced in the presence of a late transition metal complex coordination polymerization catalyst by graft copolymerization of an olefin monomer with a silicone macromonomer prepared by emulsion polymerization.

2. The polyolefin graft copolymer according to claim 1, wherein the late transition metal complex coordination polymerization catalyst is a complex of a ligand having two imine nitrogen atoms and a transition metal selected from those of Groups 8 to 10 of the periodic table.

3. The polyolefin graft copolymer according to claim 2, wherein the late transition metal complex coordination polymerization catalyst is a complex of an $\alpha$-diimine ligand and a transition metal selected from those of Group 10 of the periodic table.

4. The polyolefin graft copolymer according to claim 3, wherein the late transition metal complex coordination polymerization catalyst is an active species represented by general formula (1) or (2) after the catalyst is reacted with a co-catalyst:

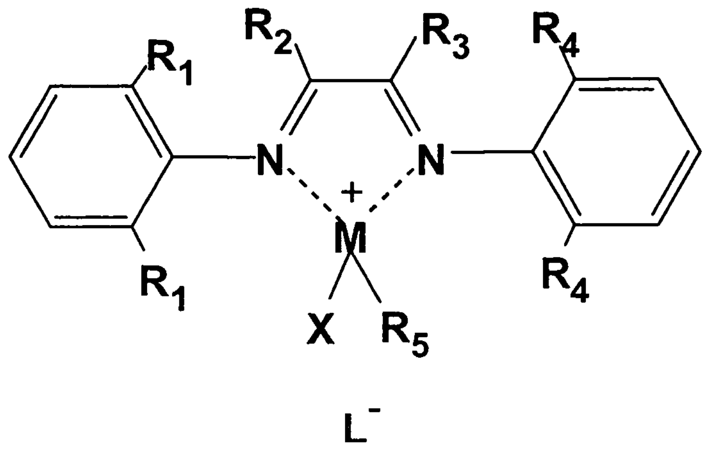

(1)

(wherein M is palladium or nickel; $R_1$ and $R_4$ are each independently a $C_1$-$C_4$ hydrocarbon group; $R_2$ and $R_3$ are each independently a hydrogen atom or a methyl group; $R_5$ is a halogen atom, a hydrogen atom, or a $C_1$-$C_{20}$ organic group; X is an organic group containing a heteroatom that can coordinate to M, wherein X may be bonded to $R_5$ or may be absent; and $L^-$ is an anion);

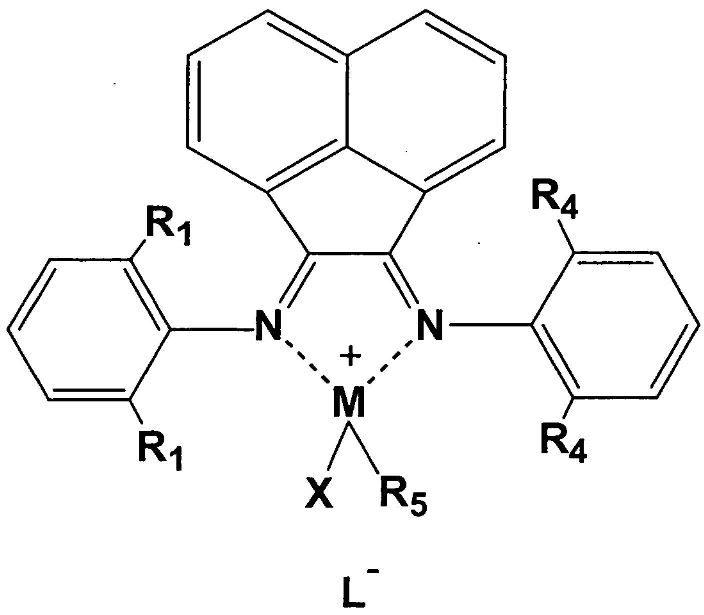

(2)

(wherein M is palladium or nickel; $R_1$ and $R_4$ are each independently a $C_1$-$C_4$ hydrocarbon group; $R_5$ is a halogen atom, a hydrogen atom, or a $C_1$-$C_{20}$ organic group; X is an organic group containing a heteroatom that can coordinate to M, wherein X may be bonded to $R_5$ or may be absent; and $L^-$ is an anion) .

**5.** The polyolefin graft copolymer according to any one of claims 1 to 4, wherein the silicone macromonomer prepared by emulsion polymerization is a silicone macromonomer produced by reacting an organosiloxane with a compound having, in its molecule, a functional group reactive with the organosiloxane and a carbon-carbon double bond for coordination polymerization.

**6.** The polyolefin graft copolymer according to any one of claims 1 to 5, wherein the polyolefin in the polyolefin graft copolymer has a branched structure.

**7.** The polyolefin graft copolymer according to any one of claims 1 to 6, wherein the olefin monomer is ethylene or propylene.

**8.** A composition containing the polyolefin graft copolymer according to any one of claims 1 to 7.

**9.** The composition containing the polyolefin graft copolymer according to claim 8, wherein the composition contains a polyolefin resin as a component.

**10.** A process for producing the polyolefin graft copolymer according to any one of claims 1 to 7.

**11.** A process for producing the composition according to claim 8 or 9.

**INTERNATIONAL SEARCH REPORT**

International application No.
PCT/JP2004/005040

A. CLASSIFICATION OF SUBJECT MATTER
Int.Cl$^7$ C08F290/06, C08F4/70

According to International Patent Classification (IPC) or to both national classification and IPC

B. FIELDS SEARCHED

Minimum documentation searched (classification system followed by classification symbols)
Int.Cl$^7$ C08F290/00-290/14, C08F4/70

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 03/20779 A1 (Kaneka Corp.), 13 March, 2003 (13.03.03), Claims; examples & JP 2003-147032 A | 1-11 |
| Y | JP 7-138415 A (Toagosei Co., Ltd.), 30 May, 1995 (30.05.95), Claims; examples (Family: none) | 1-11 |
| Y | JP 9-165519 A (Shin-Etsu Chemical Co., Ltd.), 24 June, 1997 (24.06.97), Claims; examples (Family: none) | 1-11 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 July, 2004 (16.07.04) | 03 August, 2004 (03.08.04) |
| Name and mailing address of the ISA/ Japanese Patent Office | Authorized officer |
| Facsimile No. | Telephone No. |

Form PCT/ISA/210 (second sheet) (January 2004)